(19) Europäisches Patentamt
European Patent Office
Office européen des brevets

(11) **EP 4 239 544 A1**

(12) **EUROPEAN PATENT APPLICATION**

(43) Date of publication:
06.09.2023 Bulletin 2023/36

(21) Application number: 23159663.6

(22) Date of filing: 02.03.2023

(51) International Patent Classification (IPC):
**G06Q 10/06** (2023.01) **G06Q 10/0631** (2023.01)
**G06Q 10/20** (2023.01)

(52) Cooperative Patent Classification (CPC):
**G06Q 10/20; G06Q 10/06315**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 US 202217684545**

(71) Applicant: **The Boeing Company**
**Arlington, VA 22202 (US)**

(72) Inventors:
• **MORALES, Frank**
**Arlington, 22202 (US)**
• **STOJKOVIC, Goran**
**Arlington, 22202 (US)**

(74) Representative: **St Clair Jones, Gregory Arthur Langley et al**
**Kilburn & Strode LLP**
**Lacon London**
**84 Theobalds Road**
**London WC1X 8NL (GB)**

(54) **SYSTEMS AND METHODS FOR ANALYZING UTILIZATION OF AIRCRAFT WITHIN A FLEET**

(57)   A system and a method include one or more control units configured to receive compiled flight data for a plurality of aircraft of a fleet from a flight data aggregator sub-system. The one or more control units are configured to automatically determine aircraft utilization for the plurality of aircraft of the fleet based on the compiled flight data for the plurality of aircraft of the fleet.

FIG. 1

**Description**

FIELD OF THE DISCLOSURE

Examples of the present disclosure generally relate to systems and methods for analyzing utilization of numerous aircraft within a fleet of aircraft.

BACKGROUND OF THE DISCLOSURE

Aircraft are used to transport passengers and cargo between various locations. Numerous aircraft depart from and arrive at a typical airport every day.

An airline typically includes numerous aircraft within a fleet. Each of the aircraft can fly between different locations. Further, flights for each aircraft can be significantly different. For example, a first aircraft can fly to a first destination and then remain grounded for a period of time, while a second aircraft can fly to a first destination, then a second destination, a third destination, and/or the like within the span of a day, for example. As such, each aircraft within a fleet is utilized differently.

Aircraft utilization is a significant measure of aircraft productivity. Aircraft utilization for a particular aircraft is defined as, or otherwise relates to, the difference between flying time and ground time. Aircraft utilization increases with increased flying time. That is, the more an aircraft is in flight, the higher its utilization.

As can be appreciated, with increased aircraft utilization, maintenance also increases. For example, certain regulations, such as promulgated by the United States Federal Aviation Administration (FAA) require various maintenance checks and services after predetermined flight hours, landings, and/or the like.

Airline operators typically include staff that manually keep track of the aircraft utilization to determine required maintenance services. However, as an airline operator may have numerous aircraft within a fleet (such as dozens or even hundreds of aircraft), the potential for human error in determining aircraft utilization increases. Further, humans keeping track of such aircraft utilization and determining maintenance and/or flight schedules based thereon is time and labor intensive.

SUMMARY OF THE DISCLOSURE

A need exists for a system and a method for efficiently, effectively, and accurately monitoring aircraft utilization of aircraft within a fleet. Further, a need exists for a system and a method for efficiently, effectively, and accurately scheduling maintenance services based on aircraft utilization. Additionally, a need exists for a system and a method for efficiently, effectively, and accurately scheduling flights of aircraft within a fleet based on aircraft utilization.

With those needs in mind, certain examples of the present disclosure provide a system including one or more control units configured to receive compiled flight data for a plurality of aircraft of a fleet from a flight data aggregator sub-system. The one or more control units are configured to automatically determine aircraft utilization for the plurality of aircraft of the fleet based on the compiled flight data for the plurality of aircraft of the fleet.

In at least one example, the one or more control units are further configured to automatically determine a maintenance schedule for the plurality of aircraft of the fleet based on the aircraft utilization as automatically determined based on the compiled flight data for the plurality of aircraft of the fleet. In at least one further example, the system also includes one or more robots configured to receive the maintenance schedule from the one or more control units and perform one or more maintenance operations in relation to the plurality of aircraft according to the maintenance schedule.

In at least one example, the one or more control units are further configured to automatically determine a future flight schedule for the plurality of aircraft of the fleet based on the aircraft utilization as automatically determined based on the compiled flight data for the plurality of aircraft of the fleet.

In at least one example, the flight data aggregator sub-system receives flight data for the plurality of aircraft from a plurality of flight data sources.

In at least one example, the system also includes a user interface having an electronic display. The one or more control units are further configured to show the aircraft utilization on the display.

In at least one example, the one or more controls units are configured to automatically determine the aircraft utilization by computing a productivity metric for each of the plurality of aircraft of the fleet. The productivity metric allows for a determination of various different levels of aircraft productivity.

In at least one example, the one or more control units are configured to automatically determine the aircraft utilization by calculating global values for the plurality of aircraft, flight time global, and block time global, and computing a productivity metric based, at least in part, on the global values, the flight time global, and the block time global.

Certain examples of the present disclosure provide a method including receiving, by one or more control units, compiled flight data for a plurality of aircraft of a fleet from a flight data aggregator sub-system; and automatically determining, by the one or more control units, aircraft utilization for the plurality of aircraft of the fleet based on the compiled flight data for the plurality of aircraft of the fleet.

In at least one example, the method also includes automatically determining by the one or more control units, a maintenance schedule for the plurality of aircraft of the fleet based on the aircraft utilization as automatically determined based on the compiled flight data for the plurality of aircraft of the fleet. In at least one further example, the method also includes receiving, by one or more robots, the maintenance schedule from the one or more control units; and performing, by the one or more robots, one or more maintenance operations in relation to the plurality of aircraft according to the maintenance schedule.

In at least one example, the method also includes automatically determining, by the one or more control units, a future flight schedule for the plurality of aircraft of the fleet based on the aircraft utilization as automatically determined based on the compiled flight data for the plurality of aircraft of the fleet.

BRIEF DESCRIPTION OF THE DRAWINGS

Figure 1 illustrates a schematic block diagram of a system for determining aircraft utilization, according to an example of the present disclosure.

Figure 2 illustrates a schematic block diagram of a utilization control unit in communication with a maintenance control unit and a scheduling control unit, according to an example of the present disclosure.

Figure 3 illustrates a flow chart of a method, according to an example of the present disclosure.

Figure 4 illustrates a perspective front view of an aircraft, according to an example of the present disclosure.

DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As noted, aircraft utilization is a significant measure of aircraft productivity. Certain examples of the present disclosure provide systems and methods for calculating aircraft productivity, which thereby allows for a more accurate determination of aircraft utilization, which can then be used to schedule maintenance services and future flights, for example. In at least one example, the systems and methods allow for predictive analytics based on machine learning algorithms, for example. Certain examples of the present disclosure allow airlines to enhance fleet scheduling or tail assignment for specific city-pairs or aircraft type based on categories using historical data performances. Certain examples of the present disclosure allow airlines to enhance crew pairings and crew rosters for specific city pairs or aircraft types based on categories using historical data performances. Specific examples of the present disclosure allow airlines to enhance weight and balance and flight planning to particular city-pairs or aircraft types based on categories using historical data performances

Certain examples of the present disclosure provide systems and methods for automatically (that is, without human intervention) determining aircraft utilization. Such information can be used to track a fleet of aircraft, assign and schedule aircraft within the fleet for future flights, and efficiently and effectively plan maintenance operations for the various aircraft within the fleet. Examples of the present disclosure address the problem of a lack of a comprehensive view fleet utilization by commercial airline customers.

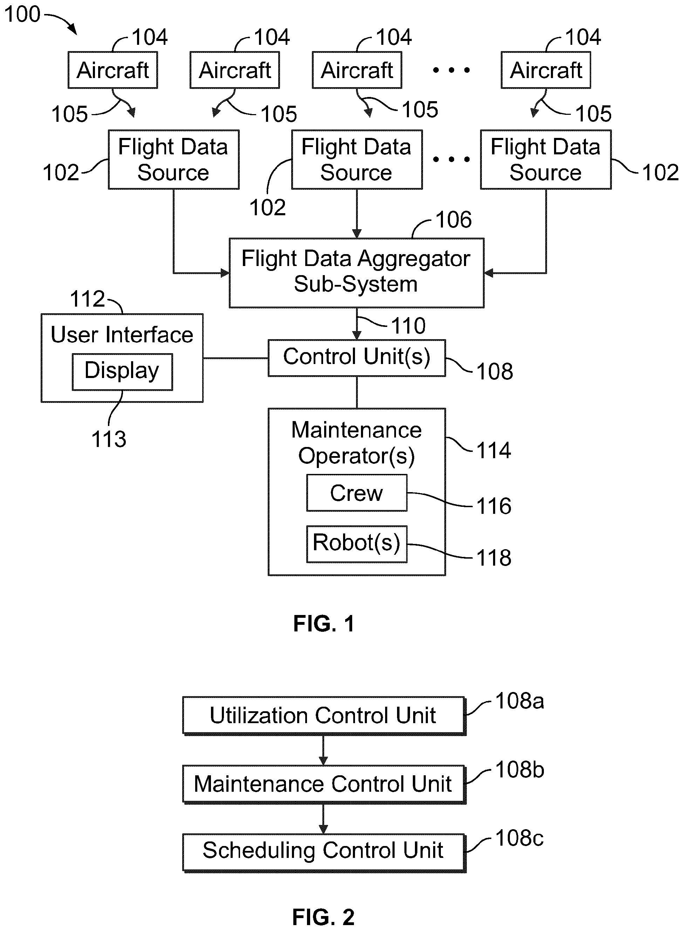

Figure 1 illustrates a schematic block diagram of a system 100 for determining aircraft utilization, according to an example of the present disclosure. The system 100 includes a plurality of flight data sources 102 in communication with a plurality of aircraft 104. In at least one example, the flight data sources 102 receive flight data 105 from the aircraft 104. The flight data includes information regarding a flight time, landings, and the like regarding each of the aircraft 104. For example, the flight data sources 102 compile flight data for each flight of each aircraft 104.

Each of the flight data sources 102 can compile flight data 105 for all of the aircraft 104, or a subset of the aircraft 104. For example, a first flight data source 102 can compile flight data 105 for a first subset of the aircraft 104, a second flight data source 102 can compile flight data 105 for a second subset of the aircraft 104 that differs from the first subset, and the like.

The aircraft 104 are within a fleet 107. The fleet 107 can be operated and controlled by an airline provider. The fleet 107 can include more or less aircraft 104 than shown. For example, the fleet 107 can include twenty or more aircraft 104. As a further example, the fleet 107 can include at least one hundred aircraft 104. As another example, the fleet 107 can include less than twenty aircraft 104.

The system 100 can include more or less flight data sources 102 than shown. For example, the flight data sources 102 can include three or more flight data sources 102. As another example, two flight data sources 102 can be used.

The flight data sources 102 can be or otherwise include different channels that collect flight data 105 from the aircraft 104. As an example, a flight data source 102 can be an organization assigned with collecting the flight data 105 from the aircraft 104. For example, the flight data source 102 can be a regulatory body, such as the FAA. As another example, the flight data source 102 can be a ground monitoring station, such as an air traffic control tower at an airport. As another example, the flight data source 102 can be a satellite that tracks one or more of the aircraft 104. As another example, an aircraft 104 itself can provide a flight data source 102.

The system 100 further includes a flight data aggregator sub-system 106 in communication with the plurality of flight data sources 102, such as through one or more wired or wireless connections. The flight data aggregator sub-system 106 collects, compiles, normalizes, and/or the like all the flight data 105 collected by the flight data sources 102. As such, the flight data aggregator sub-system 106 receives and aggregates all of the flight data 105 for the aircraft 104. In at least one example, the flight data aggregator sub-system 106 is a publicly available source of flight data 105 that compiles and publishes the flight data 105 for all of the aircraft 104, such as a System Wide Information Management (SWIM) publication service.

One or more control units 108 are in communication with the flight data aggregator sub-system 106, such as through one or more wired or wireless connections. In at least one example, the control unit(s) 108 are at the same location as the flight data aggregator sub-system 106. As another example, the control unit(s) 108 are remotely located from the flight data aggregator sub-system 106.

The control unit(s) 108 receives compiled flight data 110 from the flight aggregator sub-system 106, such as via a messenger service. The compiled flight data 110 includes the flight data 105 from all of the aircraft 104 within the fleet 107, as collected by the flight data sources 102, and aggregated by the flight data aggregator sub-system 106. As described herein, the control unit(s) 108 analyze the compiled flight data 110 to automatically determine aircraft utilization for the aircraft 104 within the fleet 107. The control unit(s) 108 can then automatically determine a maintenance schedule for the aircraft 104 based on the determined aircraft utilization. The control unit(s) 108 can also automatically determine a flight schedule for the aircraft 104 based on the determined aircraft utilization.

Figure 2 illustrates a schematic block diagram of a utilization control unit 108a in communication with a maintenance control unit 108b and a scheduling control unit 108c, according to an example of the present disclosure. Referring to Figures 1 and 2, the one or more control units 108 include the utilization control unit 108a, the maintenance control unit 108b, and the scheduling control unit 108c. In at least one example, the utilization control unit 108a, the maintenance control unit 108b, and the scheduling control unit 108c are in a common housing, such as within a computer workstation. In at least one example, the utilization control unit 108a, the maintenance control unit 108b, and the scheduling control unit 108c are part of a common circuit, such as an integrated circuit. Optionally, the utilization control unit 108a, the maintenance control unit 108b, and the scheduling control unit 108c can be separate and distinct from one another. In at least one other example, a single control unit can perform the operations of each of the utilization control unit 108a, the maintenance control unit 108b, and the scheduling control unit 108c.

The utilization control unit 108a receives the compiled flight data 110 from the flight data aggregator sub-system 106. The utilization control unit 108a analyzes the compiled flight data 110 to automatically determine the aircraft utilization for the aircraft 104 within the fleet 107. The maintenance control unit 108b can then analyze the aircraft utilization for the aircraft 104 within the fleet 107 to automatically determine a maintenance schedule (that includes one or more maintenance operations) for the aircraft 104 within the fleet 107 The maintenance control unit 108b determines the maintenance schedule for the aircraft 104 within the fleet 107 based on the aircraft utilization. The scheduling control unit 108c can analyze the aircraft utilization for the aircraft 104 within the fleet 107 to automatically plan and determine a future flight schedule for the aircraft 104. The scheduling control unit 108c determines the future flight schedule for the aircraft 104 within the fleet 107 based on the aircraft utilization.

Referring again to Figure 1, the control unit(s) 108 are in communication with a user interface 112, which includes an electronic display 113. The user interface 112 can be part of a computer workstation, which may or may not include the control unit(s) 108. The electronic display 113 can be a computer monitor, a television, and/or the like. The control unit(s) 108 can output one or more signals that are received by the user interface 112. The one or more signals include data regarding the aircraft utilization. In this manner, the control unit(s) 108 can operate the user interface 112 to show the aircraft utilization for the aircraft 104 within the fleet 107 on the display 113. The control unit(s) 108 can similarly operate the user interface 112 to show a maintenance schedule and/or a future flight schedule, as determined from the aircraft utilization, on the display 113.

In at least one example, the control unit(s) 108 are in communication with one or more maintenance operator(s) 114. The control unit(s) 108 output one or more signals to the maintenance operator(s) 114. The signal(s) include information regarding the determined maintenance schedule for the aircraft 104 within the fleet 107. The maintenance operator(s) 114 can include a maintenance crew 116 and/or one or more robots 118. The robots 118 are or otherwise include automated machines that are configured to automatically operate, such as without human intervention. The maintenance operator(s) 114 receive the determined maintenance schedule for the aircraft 104 and perform maintenance operations in relation to the aircraft 104 according to the determined maintenance schedule. For example, the robot(s) 118 can receive the determined maintenance schedule from the control unit(s) 108, such as through one or more wired or wireless connections, and automatically perform the various maintenance operations in relation to the aircraft 104 without human intervention.

In at least one example, the control unit(s) 108 collect, in real-time, the compiled flight data 110 from the flight data aggregator sub-system 106, which collects the flight data 105 from the aircraft 104 from the flight data sources 102. In at least one example, the control unit(s) 108 determine aircraft utilization for each of the aircraft 104 within the fleet 107. For example, the control unit(s) 108 (such as the utilization control unit 108a shown in Figure 2) determine the aircraft utilization for each of the aircraft 104 within the fleet based scheduled and actual flight times, such as departure and arrival times and airports, such as set forth in the following equations:

$$DTDep = ADep - SDep \tag{1}$$

$$DTArr = AArr - SArr \tag{2}$$

$$DTGDep = \sum_i DTDep_i \ , i = 1, 2... k \tag{3}$$

$$DTGArr = \sum_i DTArr_i \ , i = 1, 2... k \tag{4}$$

$$GT = AFnDep - AFpArr \tag{5}$$

$$BT = AFcArr - AFcDep \tag{6}$$

$$GTG = \sum_n GT_n \ , n = 1, 2... p \tag{7}$$

$$BTG = \sum_i BT_i \ , i = 1, 2... k \tag{8}$$

$$ACP = \left(0.99 - \frac{GTG}{BTG}\right) * 100 \tag{9}$$

$$AirCraft \ Productivity \ (ACP)$$

$$ACPC = \left(0.99 - \frac{GTG + DTDep_1}{BTG}\right) * 100 \tag{10}$$

*AirCraft Productivity Complete (ACPC)*

$$ACPC < 0 \rightarrow BAD \tag{11}$$

$$ACPC > 0 \text{ and } ACPC < 20 \rightarrow Slightly\ Good \tag{12}$$

$$ACPC \geqslant 20 \text{ and } ACPC < 35 \rightarrow Good \tag{13}$$

$$ACPC \geqslant 35 \text{ and } ACPC < 50 \rightarrow Very\ Good \tag{14}$$

$$ACPC \geqslant 50 \rightarrow Great \tag{15}$$

As shown above, ADep is actual departure time, SDep is scheduled departure time, and DT is delay time. Therefore, Equation (1) indicates that the delay time of departure (DTDep) is the difference between the actual departure time (ADep) and the scheduled departure time (SDep).

With respect to Equation (2), AArr is actual arrival time, and SArr is the scheduled arrival time. Therefore, the delay time of arrival (DTArr) is the difference between actual arrival time (AArr) and the scheduled arrival time (SArr).

Based on these times, the control unit(s) 108 calculate for each flight of each aircraft 104 the delays DTDep and DTArr, ground time (GT), as set forth in Equation (5), block times (BT), as set forth in Equation (6). Then, the control unit(s) 108 calculates global values for all of the aircraft 104, such as global delay time (DTGDep, and DTGArr), as set forth in Equations (3) and (4), respectively, flight time global (GTG), as set forth in Equation (7), and block time global (BTG), as set forth in Equation (8). With the values of the variables (GTG, BTG, and first leg delay-only DTDep 1), the control unit(s) 108 then computes a productivity metric, such as an Aircraft Productivity Complete (ACPC), as set forth in Equation (10). The control unit(s) 108 then assesses ACPC to determine various levels of aircraft productivity, as set forth in Equations (11)-(15). For example, the different levels of aircraft productivity (such as bad, slightly good, good, very good, and great) can be used as classifications that allow for efficient and effective evaluation of aircraft productivity, such as can then be used to determine services (for example, maintenance services and/or scheduling) with predefined objective levels. The aircraft utilization, as determined by the one or more control unit(s) 108, includes the aircraft productivity, such as determined via the algorithm as set forth in Equations (1)-(15), for example.

In at least one example, the control unit(s) 108 can be used to build machine learning algorithms to build both predictive and prescriptive analytics. Further, the control unit(s) 108 can use Principal Component Analysis (PCA) to show the results of the determination of aircraft utilization on the display 113.

Certain examples of the present disclosure provide systems and methods that include an application programming interface (API), which allows entities to access service and data so as to validate performance in real time and/or on-demand.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit(s) 108 (and/or the controls units 108a, 108b, and 108c) may be or include one or more processors that are configured to control operation, as described herein.

The control unit(s) 108 (and/or the controls units 108a, 108b, and 108c) is configured to execute a set of instructions that are stored in one or more data storage units or elements (such as one or more memories), in order to process data. For example, the control unit(s) 108 (and/or the controls units 108a, 108b, and 108c) may include or be coupled to one or more memories. The data storage units may also store data or other information as desired or needed. The data storage units may be in the form of an information source or a physical memory element within a processing machine.

The set of instructions may include various commands that instruct the control unit(s) 108 (and/or the controls units 108a, 108b, and 108c) as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit(s) 108 (and/or the controls units 108a, 108b, and 108c). It is to be understood that the processing or control units may represent circuits, circuitry, or portions thereof that may be implemented as hardware with associated instructions (e.g., software stored on a, optionally, tangible and, optionally, non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit(s) 108 (and/or the controls units 108a, 108b, and 108c) may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

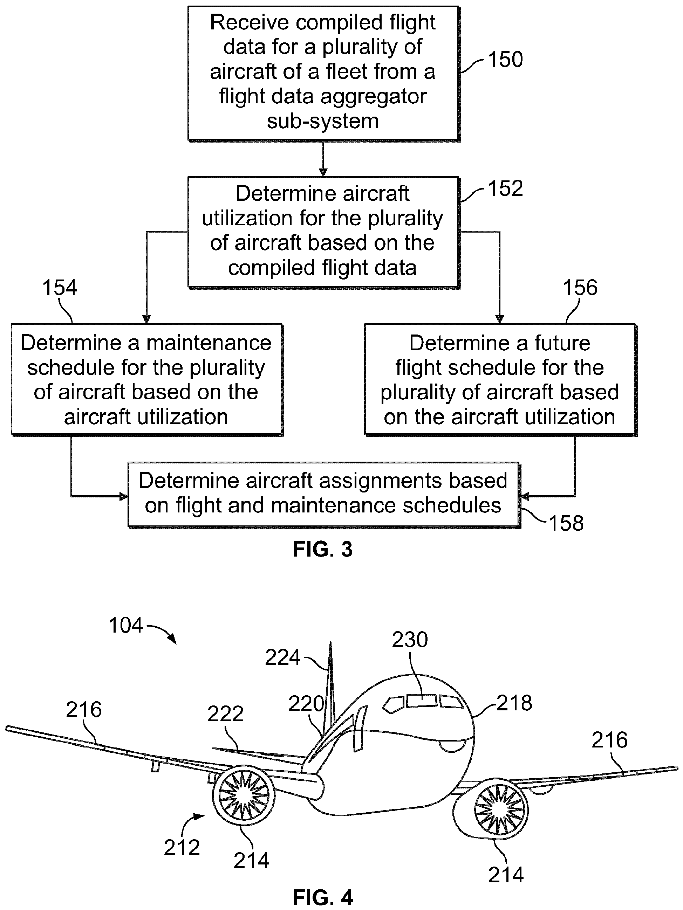

Figure 3 illustrates a flow chart of a method, according to an example of the present disclosure. Referring to Figures 1-3, at 150, the control unit(s) 108 receive the compiled flight data 110 for the plurality of aircraft 104 of the fleet 107 from the flight data aggregator sub-system 106.

At 152, the control unit(s) 108 (such as the utilization control unit 108a) automatically (without human intervention) determines aircraft utilization for the plurality of aircraft 104 based on the compiled flight data 110. For example, the control unit(s) 108 determines the aircraft utilization for each of the aircraft 104 from aircraft productivity for each of the aircraft, such as described with respect to Equations (1)-(15).

At 154, the control unit(s) 108 (such as the maintenance control unit 108b) can automatically determine a maintenance schedule for the plurality of aircraft 104 based on the determined aircraft utilization for each of the aircraft 104. For example, one or more maintenance operations for a particular aircraft 104 can be determined and scheduled by the control unit(s) 108 based on the ACPC, as determined by the Equations (1 1)-(15). As a further example, one or more maintenance operations are scheduled for an ACPC that is "bad" sooner than for an ACPC that is "great."

At 156, the control unit(s) 108 (such as the scheduling control unit 108c) can automatically determine a future flight schedule for the plurality of aircraft 104 based on the determined aircraft utilization. For example, the AFCP for a particular aircraft 104, as determined by the control unit(s) 108 using the Equations (11)-(15) determines the readiness for the aircraft 104 for a flight. As a further example, an aircraft having an AFCP that is "great" is ready for immediate scheduling of a flight. In at least one example, at 158 aircraft assignments are then determined based on the flight and maintenance schedules.

Referring to Figures 1-3, embodiments of the subject disclosure provide systems and methods that allow large amounts of data to be quickly and efficiently analyzed by a computing device. For example, a fleet 107 can include hundreds of aircraft 104, each of which is to be scheduled for maintenance and future flights. Each of the aircraft is automatically tracked to determine aircraft utilization. As such, large amounts of data are being tracked and analyzed. The vast amounts of data are efficiently organized and/or analyzed by the control unit(s) 108, as described herein. The control unit(s) 108 analyze the data in a relatively short time in order to quickly and efficiently determine aircraft utilization, maintenance schedules, and future flight schedules. A human being would be incapable of efficiently analyzing such vast amounts of data in such a short time. As such, embodiments of the subject disclosure provide increased and efficient functionality, and vastly superior performance in relation to a human being analyzing the vast amounts of data.

In at least one embodiment, components of the system 100, such as the control unit(s) 108, provide and/or enable a computer system to operate as a special computer system for determining aircraft utilization, scheduling maintenance based on the aircraft utilization, and scheduling future flights of the aircraft based on the aircraft utilization.

Figure 4 illustrates a perspective front view of an aircraft 104, according to an example of the present disclosure. The aircraft 104 includes a propulsion system 212 that includes engines 214, for example. Optionally, the propulsion system 212 may include more engines 214 than shown. The engines 214 are carried by wings 216 of the aircraft 104. In other embodiments, the engines 214 may be carried by a fuselage 218 and/or an empennage 220. The empennage 220 may also support horizontal stabilizers 222 and a vertical stabilizer 224. The fuselage 218 of the aircraft 104 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like.

Figure 4 shows an example of an aircraft 104. It is to be understood that the aircraft 104 can be sized, shaped, and configured differently than shown in Figure 4. Further, the aircraft 104 shown and described with respect to Figure 1 can be configured as shown in Figure 4. Optionally, one or more of the aircraft 104 shown and described with respect to Figure 1 can be sized, shaped and configured differently than shown in Figure 4.

Further, the disclosure comprises examples according to the following clauses:

Clause 1. A system comprising:

one or more control units configured to receive compiled flight data for a plurality of aircraft of a fleet from a flight data aggregator sub-system,

wherein the one or more control units are configured to automatically determine aircraft utilization for the plurality of aircraft of the fleet based on the compiled flight data for the plurality of aircraft of the fleet.

Clause 2. The system of Clause 1, wherein the one or more control units are further configured to automatically determine a maintenance schedule for the plurality of aircraft of the fleet based on the aircraft utilization as automatically determined based on the compiled flight data for the plurality of aircraft of the fleet.

Clause 3. The system of Clause 2, further comprising one or more robots configured to receive the maintenance schedule from the one or more control units and perform one or more maintenance operations in relation to the plurality of aircraft according to the maintenance schedule.

Clause 4. The system of any of Clauses 1-3, wherein the one or more control units are further configured to automatically determine a future flight schedule for the plurality of aircraft of the fleet based on the aircraft utilization as automatically determined based on the compiled flight data for the plurality of aircraft of the fleet.

Clause 5. The system of any of Clauses 1-4, wherein the flight data aggregator sub-system receives flight data for the plurality of aircraft from a plurality of flight data sources.

Clause 6. The system of any of Clauses 1-5, further comprising a user interface having an electronic display, wherein the one or more control units are further configured to show the aircraft utilization on the display.

Clause 7. The system of any of Clauses 1-6, wherein the one or more controls units are configured to automatically determine the aircraft utilization by computing a productivity metric for each of the plurality of aircraft of the fleet, wherein the productivity metric allows for a determination of various different levels of aircraft productivity.

Clause 8. The system of any of Clauses 1-7, wherein the one or more control units are configured to automatically determine the aircraft utilization by:

calculating global values for the plurality of aircraft, flight time global, and block time global, and

computing a productivity metric based, at least in part, on the global values, the flight time global, and the block time global.

Clause 9. A method comprising:

receiving, by one or more control units, compiled flight data for a plurality of aircraft of a fleet from a flight data aggregator sub-system; and

automatically determining, by the one or more control units, aircraft utilization for the plurality of aircraft of the fleet based on the compiled flight data for the plurality of aircraft of the fleet.

Clause 10. The method of Clause 9, further comprising automatically determining by the one or more control units, a maintenance schedule for the plurality of aircraft of the fleet based on the aircraft utilization as automatically determined based on the compiled flight data for the plurality of aircraft of the fleet.

Clause 11. The method of Clause 10, further comprising:

receiving, by one or more robots, the maintenance schedule from the one or more control units; and

EP 4 239 544 A1

performing, by the one or more robots, one or more maintenance operations in relation to the plurality of aircraft according to the maintenance schedule.

Clause 12. The method of any of Clauses 9-11, further comprising automatically determining, by the one or more control units, a future flight schedule for the plurality of aircraft of the fleet based on the aircraft utilization as automatically determined based on the compiled flight data for the plurality of aircraft of the fleet.

Clause 13. The method of any of Clauses 9-11, further comprising receiving, by the flight data aggregator sub-system, flight data for the plurality of aircraft from a plurality of flight data sources.

Clause 14. The method of any of Clauses 9-13, further comprising showing, by the one or more control units, the aircraft utilization on an electronic display of a user interface.

Clause 15. The method of any of Clauses 9-14, wherein said automatically determining comprises computing a productivity metric for each of the plurality of aircraft of the fleet, wherein the productivity metric allows for a determination of various different levels of aircraft productivity.

Clause 16. The method of any of Clauses 9-15, wherein said automatically determining comprises:

calculating global values for the plurality of aircraft, flight time global, and block time global, and computing a productivity metric based, at least in part, on the global values, the flight time global, and the block time global.

Clause 17. A system comprising:

one or more control units configured to receive compiled flight data for a plurality of aircraft of a fleet from a flight data aggregator sub-system, wherein the flight data aggregator sub-system receives flight data for the plurality of aircraft from a plurality of flight data sources,

wherein the one or more control units are configured to automatically determine aircraft utilization for the plurality of aircraft of the fleet based on the compiled flight data for the plurality of aircraft of the fleet,

wherein the one or more control units are further configured to automatically determine a maintenance schedule for the plurality of aircraft of the fleet based on the aircraft utilization as automatically determined based on the compiled flight data for the plurality of aircraft of the fleet, and

wherein the one or more control units are further configured to automatically determine a future flight schedule for the plurality of aircraft of the fleet based on the aircraft utilization as automatically determined based on the compiled flight data for the plurality of aircraft of the fleet.

Clause 18. The system of Clause 17, further comprising one or more robots configured to receive the maintenance schedule from the one or more control units and perform one or more maintenance operations in relation to the plurality of aircraft according to the maintenance schedule.

Clause 19. The system of either of Clauses 17 or 18, further comprising a user interface having an electronic display, wherein the one or more control units are further configured to show the aircraft utilization, the maintenance schedule, and the future flight schedule on the display.

Clause 20. The system of any of Clauses 17-19, wherein the one or more controls units are configured to automatically determine the aircraft utilization by computing a productivity metric for each of the plurality of aircraft of the fleet, wherein the productivity metric allows for a determination of various different levels of aircraft productivity.

As described herein, examples of the present disclosure provide systems and methods for efficiently, effectively, and accurately monitoring aircraft utilization of aircraft within a fleet. Further, examples of the present disclosure provide systems and methods for efficiently, effectively, and accurately scheduling maintenance services based on aircraft utilization. Additionally, examples of the present disclosure provide system and a method for efficiently, effectively, and accurately scheduling flights of aircraft within a fleet based on aircraft utilization. Also, examples of the present disclosure provide airline operators and others access to services to validate aircraft performance in real time and on-demand, and

9

a more accurate way to determine aircraft performance.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

**Claims**

1.  A system (100) comprising:

    one or more control units (108) configured to receive compiled flight data (105, 110) for a plurality of aircraft (104) of a fleet (107) from a flight data (105, 110) aggregator sub-system (106),
    wherein the one or more control units (108) are configured to automatically determine aircraft (104) utilization for the plurality of aircraft (104) of the fleet (107) based on the compiled flight data (105, 110) for the plurality of aircraft (104) of the fleet (107).

2.  The system (100) of claim 1, wherein the one or more control units (108) are further configured to automatically determine a maintenance schedule for the plurality of aircraft (104) of the fleet (107) based on the aircraft (104) utilization as automatically determined based on the compiled flight data (105, 110) for the plurality of aircraft (104) of the fleet (107).

3.  The system (100) of either of claims 1 or 2, further comprising one or more robots (118) configured to receive the maintenance schedule from the one or more control units (108) and perform one or more maintenance operations in relation to the plurality of aircraft (104) according to the maintenance schedule.

4.  The system (100) of any of claims 1 to 3, wherein the one or more control units (108) are further configured to automatically determine a future flight schedule for the plurality of aircraft (104) of the fleet (107) based on the aircraft (104) utilization as automatically determined based on the compiled flight data (105, 110) for the plurality of aircraft (104) of the fleet (107).

5.  The system (100) of any of claims 1 to 4, wherein the flight data (105, 110) aggregator sub-system (106) receives flight data (105, 110) for the plurality of aircraft (104) from a plurality of flight data (105, 110) sources (102).

6. The system (100) of any of claims 1 to 5, further comprising a user interface (112) having an electronic display (113), wherein the one or more control units (108) are further configured to show the aircraft (104) utilization on the display.

7. The system (100) of any of claims 1 to 6, wherein the one or more controls units are configured to automatically determine the aircraft (104) utilization by computing a productivity metric for each of the plurality of aircraft (104) of the fleet (107), wherein the productivity metric allows for a determination of various different levels of aircraft (104) productivity.

8. The system (100) of any of claims 1 to 7, wherein the one or more control units (108) are configured to automatically determine the aircraft (104) utilization by:

   calculating global values for the plurality of aircraft (104), flight time global, and block time global, and computing a productivity metric based, at least in part, on the global values, the flight time global, and the block time global.

9. A method comprising:

   receiving, by one or more control units (108), compiled flight data (105, 110) for a plurality of aircraft (104) of a fleet (107) from a flight data (105, 110) aggregator sub-system (106); and
   automatically determining, by the one or more control units (108), aircraft (104) utilization for the plurality of aircraft (104) of the fleet (107) based on the compiled flight data (105, 110) for the plurality of aircraft (104) of the fleet (107).

10. The method of claim 9, further comprising automatically determining by the one or more control units (108), a maintenance schedule for the plurality of aircraft (104) of the fleet (107) based on the aircraft (104) utilization as automatically determined based on the compiled flight data (105, 110) for the plurality of aircraft (104) of the fleet (107).

11. The method of either of claims 9 or 10, further comprising:

   receiving, by one or more robots (118), the maintenance schedule from the one or more control units (108); and
   performing, by the one or more robots (118), one or more maintenance operations in relation to the plurality of aircraft (104) according to the maintenance schedule.

12. The method of any of claims 9 to 11, further comprising automatically determining, by the one or more control units (108), a future flight schedule for the plurality of aircraft (104) of the fleet (107) based on the aircraft (104) utilization as automatically determined based on the compiled flight data (105, 110) for the plurality of aircraft (104) of the fleet (107).

13. The method of any of claims 9 to 12, further comprising receiving, by the flight data (105, 110) aggregator sub-system (106), flight data (105, 110) for the plurality of aircraft (104) from a plurality of flight data (105, 110) sources (102).

14. The method of any of claims 9 to 13, further comprising showing, by the one or more control units (108), the aircraft (104) utilization on an electronic display (113) of a user interface (112).

15. The method of any of claims 9 to 14, wherein said automatically determining comprises computing a productivity metric for each of the plurality of aircraft (104) of the fleet (107), wherein the productivity metric allows for a determination of various different levels of aircraft (104) productivity.

100

104
Aircraft

104
Aircraft

104
Aircraft

· · ·

104
Aircraft

105

105

105

105

102
Flight Data
Source

Flight Data
Source

· · ·

Flight Data
Source
102

102

106
Flight Data Aggregator
Sub-System

110

112
User Interface
Display

Control Unit(s)
108

113

Maintenance
Operator(s)
114

Crew
116

Robot(s)
118

**FIG. 1**

Utilization Control Unit
108a

Maintenance Control Unit
108b

Scheduling Control Unit
108c

**FIG. 2**

Receive compiled flight
data for a plurality of
aircraft of a fleet from a
flight data aggregator
sub-system — 150

Determine aircraft
utilization for the plurality
of aircraft based on the
compiled flight data — 152

154

Determine a maintenance
schedule for the plurality
of aircraft based on the
aircraft utilization

156

Determine a future
flight schedule for the
plurality of aircraft based
on the aircraft utilization

Determine aircraft assignments based
on flight and maintenance schedules — 158

**FIG. 3**

104

224   230   220   218   216

216   222   212   214   214

**FIG. 4**

## EUROPEAN SEARCH REPORT

Application Number

EP 23 15 9663

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/023209 A1 (MAISONNEUVE PIERRE-LOIC [FR] ET AL) 28 January 2010 (2010-01-28) | 1-3, 5-11, 13-15 | INV. G06Q10/06 G06Q10/0631 G06Q10/20 |
| A | * paragraphs [0013], [0020] - [0026]; figure 1 * | 4,12 | |
| | ----- | | |
| X | WO 2016/185323 A1 (BOMBARDIER INC [CA]; SHORT BROTHERS PLC [IE]) 24 November 2016 (2016-11-24) * paragraphs [0003], [0132] - [0137], [0156]; figure 2 * | 1-15 | |
| | ----- | | |
| A | US 2008/125933 A1 (WILLIAMS ZACHARY C [US] ET AL) 29 May 2008 (2008-05-29) * paragraphs [0006], [0032] * | 1-15 | |
| | ----- | | |

TECHNICAL FIELDS
SEARCHED        (IPC)

G06Q

The present search report has been drawn up for all claims

| Place of search | Date of completion of the search | Examiner |
|---|---|---|
| The Hague | 14 July 2023 | Gagin, Thibaut |

## ANNEX TO THE EUROPEAN SEARCH REPORT
## ON EUROPEAN PATENT APPLICATION NO.

EP 23 15 9663

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2023

| Patent document cited in search report | | Publication date | Patent family member(s) | | Publication date |
|---|---|---|---|---|---|
| US 2010023209 | A1 | 28-01-2010 | EP | 2151791 A1 | 10-02-2010 |
| | | | FR | 2934397 A1 | 29-01-2010 |
| | | | US | 2010023209 A1 | 28-01-2010 |
| WO 2016185323 | A1 | 24-11-2016 | CA | 2984726 A1 | 24-11-2016 |
| | | | CN | 107636701 A | 26-01-2018 |
| | | | EP | 3295387 A1 | 21-03-2018 |
| | | | US | 2018121887 A1 | 03-05-2018 |
| | | | WO | 2016185323 A1 | 24-11-2016 |
| US 2008125933 | A1 | 29-05-2008 | NONE | | |

EPO FORM P0459

For more details about this annex : see Official Journal of the European Patent Office, No. 12/82